# EUROPEAN PATENT SPECIFICATION

(11) **EP 2 337 738 B1**
(45) Date of publication and mention of the grant of the patent: **27.04.2016**
(21) Application number: 09785703.1
(22) Date of filing: 28.09.2009
(51) Int. Cl.: B64C 21/00, B64C 23/00, B64C 25/00

(54) **BLUFF BODY NOISE CONTROL**
HANDHABUNG DER GERÄUSCHENTWICKLUNG AN UMSTRÖMTEN STUMPFEN KÖRPERN
GESTION DU BRUIT AERODYNAMIQUE GENERE PAR UN CORPS OBTUS

(30) Priority: 22.10.2008 GB 0819366; 23.10.2008 WO PCT/GB2008/050983
(43) Date of publication of application: 29.06.2011
(73) Proprietor: Airbus Operations Limited, Bristol BS34 7PA (GB)
(72) Inventor: CHOW, Leung, Choi, Bristol Bristol BS99 7AR (GB); ANGLAND, David, Southampton Hampshire SO17 1BJ (GB); ZHANG, Xin, Southampton Hampshire SO17 1BJ (GB); GOODYER, Michael, Southampton Hampshire SO17 1BJ (GB)
(74) Representative: Teesdale, Emily Catherine
(86) International application number: PCT/GB2009/051268
(87) International publication number: WO 2010/046679

(56) References cited:
- EP-A- 0 375 586
- EP-A- 1 382 526
- WO-A-2004/089743
- WO-A-2007/106863
- WO-A-2009/053745
- DE-A1- 10 052 022
- FR-A- 1 323 294
- US-A- 2 129 824

## Description

### Background of the Invention

The present invention relates to noise-reduction apparatus for use on an aircraft.

More particularly, but not exclusively, the invention also relates to a method of, and apparatus for, reducing noise generated by the interaction of the landing gear or parts thereof and the air flowing past it during flight, take-off and/or landing.

The invention also relates to an aircraft noise reduction device comprising a flow control apparatus arranged to be positioned downstream of a flow-facing element, possibly on a landing gear and a method of reducing noise caused by landing gear on an aircraft.

Flow around bodies generates noise, which is detrimental in particular aerodynamic applications, for example where low noise emissions are a design requirement. One such application where the level of noise emissions is important is in the design of commercial aircraft. Over the past decades engine noise has been significantly reduced, for example by the introduction of high-bypass ratio turbofan engines. However, maintaining the minimum engine ground clearance with such high-bypass ratio turbo fan engines results in longer landing gear.

Thus, landing gear on commercial aircraft have been identified as major noise contributors during approach and landing. The design of a landing gear is primarily based on its structural and dynamic function. These stringent requirements make it extremely difficult to have a totally aerodynamic gear. This complex geometric design gives rise to unsteady flow which leads to unwanted noise generation.

WO2009/053745 A1 discloses the use of a splitter plate to reduce noise induced by unsteady flow downstream of a flow-facing element. This document also discloses preliminary experiments which were carried out to evaluate the effectiveness of using a splitter plate.

Fairings have been proposed as a means of reducing landing gear noise. For example, a noise reduction fairing for an aircraft landing gear is disclosed in WO 01/04003A1. Such noise reduction fairings at least partially shield downstream components such as strut stays and actuators from high-speed flow.

WO2007/106863 discloses a plasma fairing for reducing noise generated by an aircraft landing gear. The plasma fairing reduces body flow separation of the fluid flow over the landing gear. The plasma generating devices can be mounted to the surface of the landing gear.

EP 1382526 discloses an aircraft with an elongate nozzle for producing an air screen in front of the nose landing gear.

US 2,129,824 discloses an inflatable fairing for use behind a landing gear. The fairing is inflated into a streamlined shape when the landing gear is extended and deflated when the landing gear is to be retracted.

WO2004/089743 discloses an aircraft landing gear door assembly. The door is rotatable about an axis substantially parallel to the aircraft axis and also rotatable about an axis that is substantially transverse to the aircraft axis. It can move into a position in which it acts as a fairing in front of the landing gear.

The present invention seeks to mitigate the above-mentioned problems and/or to provide an improved noise-reduction method or apparatus.

### Summary of the Invention

A method of reducing noise caused by the interaction of airflow between two bluff bodies which are in a generally tandem arrangement consists in providing flow control such that the peak turbulence is at least partially displaced from, or reduced at, the surface of the downstream body. In this context a tandem arrangement is an arrangement of two bluff bodies in series in the streamwise direction. The two bluff bodies do not have to be directly upstream/downstream of each other (i.e. aligned with each other in the streamwise direction) but can be at an oblique angle to each other (i.e. not aligned with each other in the streamwise direction).

Peak turbulence can be examined by looking at the Reynolds stresses or perturbed velocities. In the present invention, the use of flow control causes the position where peak turbulence occurs (seen as peak perturbed velocities and peak Reynolds stresses) to move away from the centreline of the downstream body such that the peak turbulence is displaced from the surface of the downstream body.

The applicants have recognised that when an unsteady wake from an upstream body impinges on a downstream body, the resultant interaction noise can be significant.

The skilled person will appreciate that a bluff body may be generally characterised as any body where there is significant flow separation and a generally unsteady wake.

The flow control may be arranged to break down large flow structures in the flow between, and/or around, the bluff bodies.

The flow control may be provided by a flow control device on either the upstream or downstream body.

The flow control comprises the use of blowing. The flow control device is arranged to provide distributed blowing through the surface of one of the bodies. In other words, the flow control device is arranged to blow a plurality of jets of air from different positions distributed over the surface of the bluff body.

The flow control device may form part of the bluff body. In other words, the flow control device may be contained within the bluff body.

The flow control device may comprise a series of plenum chambers distributed around one of the bluff bodies. For example, plenum chambers may be distributed at a variety of angular positions around the body. This gives a more uniform distribution of blowing.

Blowing may be applied to both sides of the body from 60 degrees to 150 degrees as measured from the leading-edge of the body.

The positions where blowing is applied can be optimised depending on the airflow speed and the geometry configuration of the bluff bodies.

Each plenum chamber may, for example, be fed by a cross-drilled pipe.

The plenum chambers may be covered by air-permeable plate. This allows air to pass through the plate. For example, a perforated steel plate or a sintered bronze plate.

The air-permeable plate may have a small pore size. This may enable a large pressure loss coefficient and/or less variation in permeation velocity across it and/or a higher pressure differential across the perforated plate for a given permeation velocity. A small pore size also produces a lower volume of high frequency sound (hiss) from the air being blown through the pores.

The porosity of the plate may be approximately 30%. Porosity is defined as the ratio of open area of the plate to total area of the plate.

The pore size and porosity may be optimised for each airflow speed and geometry configuration of the bluff bodies.

An embodiment of the first aspect not of the invention concerns a method of reducing noise caused by an airborne aircraft resulting from the interaction of airflow between an upstream bluff body and a downstream bluff body positioned in a generally tandem arrangement in the streamwise direction, wherein the method comprises the step of blowing a plurality of jets of air from at least one of the upstream bluff body and the downstream bluff body, the jets of air being blown from different positions distributed over the surface of the bluff body. Such an arrangement of distributed blowing may act to provide air flow control such that the peak turbulence downstream of the upstream body, caused by air flowing past the upstream body, is reduced and/or displaced to a position further from the downstream bluff body. Such reduction or displacement in the peak turbulence downstream of the upstream bluff body acts to reduce noise, that would otherwise be caused by the interaction of the airflow between the upstream bluff body and the downstream bluff body.

According to a second aspect not of the invention there is also provided a noise reduction apparatus for use on a bluff body which, in use, is arranged in a generally tandem arrangement with a further bluff body, the apparatus comprising a flow control device arranged such that the peak turbulence is at least partially displaced from, or reduced at, the surface of the downstream body. In this context a tandem arrangement is an arrangement of two bluff bodies in series in the streamwise direction. The two bluff bodies do not have to be directly upstream/downstream of each other (i.e. aligned with each other in the streamwise direction) but can be at an oblique angle to each other (i.e. not aligned with each other in the streamwise direction).

An embodiment of the second aspect not of the invention concerns an aircraft including a first bluff body and a second bluff body positioned in a generally tandem arrangement such that when the aircraft is airborne the first bluff body is upstream of the second bluff body, wherein the aircraft includes a flow control device on at least one of the first bluff body and the second bluff body, the flow control device is arranged to blow a plurality of jets of air from different positions distributed over the surface of the bluff body.

It will be appreciated that any features described with reference to the method according to the first aspect not of the invention are equally applicable to the noise reduction apparatus of the second aspect not of the invention.

According to a first aspect of the invention there is provided a part of an aircraft landing gear, the part comprising a flow-facing element and an aircraft noise reduction device comprising a flow control apparatus arranged to be positioned downstream of the flow-facing element, wherein the flow control apparatus is arranged, in use, to reduce noise induced by unsteady flow downstream of the flow-facing element, and wherein the flow control apparatus is arranged to be moveable in relation to the flow-facing element between a stowed position and a deployed position.

The applicants have found that unsteady flow, around and in the wake of a flow- facing element can cause a significant contribution to creation of broadband noise. In particular, it has been noted that unsteady velocity fluctuations and/or net lift forces generated in the flow may be a key noise generating mechanism. As such, embodiments of the invention utilise a flow control apparatus downstream of the flow- facing element to reduce broadband noise. In particular, the flow control apparatus may be arranged to reduce the flow fluctuations due to relatively large scale flow structures in the wake. For example, the flow control apparatus may be arranged to suppress vortex shedding downstream of the flow-facing element. Allowing the flow control apparatus to be stowed while not in use is advantageous as, for example, when used on a landing gear, it allows deflection and articulation of the landing gear. It also allows stowage/retraction of the landing gear while the flow control apparatus is installed thereon. In other words, movement of the landing gear is not impeded by a flow control apparatus. It also means there is more space available in the very limited stowage space of a landing gear bay.

The flow control apparatus may be a passive flow control apparatus. A passive flow control apparatus may be optimised to provide the desired flow control in a particular phase of flight. For example the flow control apparatus may be optimised to provide the maximum noise reduction in flow conditions that would occur during approach and landing.

The flow control apparatus may comprise a splitter plate arranged to extend downstream of the flow-facing element when in the deployed position. Splitter plates (alternatively referred to as split plates) are a known means of aerodynamic flow control and have been primarily used to modify the separated wake behind bluff bodies. Splitter plates generally extend from the centre-line of the downstream face of the bluff body.

When in the deployed position, the splitter plate may extend in a substantially radial direction with respect to the flow-facing element. It may be substantially aligned with the free stream airflow.

When in the stowed position, the splitter plate may be orientated to at least partly align with the flow-facing element. This allows the effective space taken up by the flow control apparatus to be reduced. When on a landing gear, this allows the landing gear to be retracted more easily.

The flow control apparatus is made from a flexible material such that the flow control apparatus is deformable between the stowed and deployed positions.

The flow control apparatus is made from a resiliently flexible material such that the flow control apparatus naturally assumes the deployed position. This means that no active control is required to deploy the flow control apparatus.

The flow control apparatus may be made from a material with a sufficient stiffness to be maintained in the deployed position during use.

The flow control apparatus may be made from rubber.

The flow control apparatus may comprise brushes with resiliently deformable bristles.

The bristles may be arranged to be mounted on a downstream side of the flow-facing element such that the bristles extend downstream of the flow-facing element when the flow control apparatus is in the deployed position.

The flow control apparatus may be arranged to be automatically moved between the stowed and deployed positions when the flow-facing element is moved from its stowed and deployed positions. This means that no active control (other than control of the stowing/deployment of the flow-facing element) is required to cause stowing/deployment of the flow control apparatus.

The flow-facing element may comprise an aircraft structural element. For example the flow- facing element may be a strut. Alternatively, the flow-facing element may comprise a fairing, for locating upstream of a structural element such that, in use, airflow is at least partially diverted away from the structural element, and the flow control apparatus may be provided between the fairing and the structural element. Such an arrangement may help reduce self-noise which may otherwise be produced by the fairing.

Where the flow-facing element is a fairing, the flow control apparatus may be arranged to reduce re-circulating flow between the fairing and the structural element. In some embodiments a splitter plate may be arranged such that it is also adapted to secure the fairing to the structural member. The structural element may comprise a component of an aircraft landing gear.

The flow control apparatus may be arranged to be automatically moved between the stowed and deployed positions by a force applied by an element of the landing gear when the landing gear is moved from its stowed and deployed positions. This means that the flow control apparatus can be urged into the stowed position by elements of the landing gear moving into the landing gear stowed position.

The flow control apparatus may be arranged to suppress vortex shedding downstream of the flow-facing element.

The splitter plate may have a length which is less than, equal to or greater than the streamwise length of the structural element.

The invention also provides an aircraft landing gear comprising a part of an aircraft landing gear as described above.

The invention also provides an aircraft comprising a part of an aircraft landing gear or an aircraft landing gear as described above.

According to a second aspect of the invention there is also provided a method of reducing noise caused by landing gear on an aircraft including the steps of identifying a part of the landing gear that contributes to the noise generated by the landing gear when in flight, and providing an aircraft noise reduction device according as described above for reducing the noise generated by said part.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1a shows, in plan view, a noise reduction apparatus in accordance with an embodiment of the first aspect not of the invention, which utilises distributed blowing on a cylinder upstream of an H-beam;
Figure 1b shows, in plan view, a noise reduction apparatus in accordance with an embodiment of the first aspect not of the invention, which utilises distributed blowing on a cylinder downstream of an H-beam;
Figure 2 shows an anechoic chamber, used for measuring noise levels;
Figure 3 shows a cut away section of a cylinder model, showing 3 plenum chambers;
Figure 4 shows, schematically, a perspective view of a cylinder model, showing cross-drilled pipes for feeding air to the plenum chambers;
Figure 5 is a graph showing mean velocity profiles in the wake at x = 0.079m;
Figures 6a to 6f are graphical representations of the Reynolds stresses, comparing the use of blowing to no blowing;
Figures 7a to 7c are graphs showing the profiles of Reynolds stresses across the wake;
Figure 8 is a graph of sound pressure levels (SPL) against frequency for different flow rates of blowing air for the cylinder upstream of the H-beam;
Figure 9 is a graph of sound pressure levels (SPL) against frequency for the cylinder upstream of the H-beam;
Figure 10a shows, in plan view, a noise reduction device in accordance with an embodiment of the invention which utilises a stowable splitter plate, shown in its deployed position;
Figure 10b shows, in plan view, a noise reduction device of
Figure 11 shows, in plan view, a noise reduction device in accordance with an embodiment of the invention which utilises a stowable splitter plate made from brushes, shown in its deployed position; and
Figure 12 shows, in plan view, a noise reduction device in accordance with an embodiment of the invention which utilises a noise reduction fairing and stowable splitter plate, shown in its deployed position.

### Detailed Description

While previous work has focused on drag reduction or tonal noise reduction, this work investigates controlling broadband interaction noise between bluff body components. An experimental investigation was conducted to determine how the application of blowing to the cylinder modified the aerodynamics and acoustics of two bluff bodies in a directly tandem arrangement in the streamwise direction.

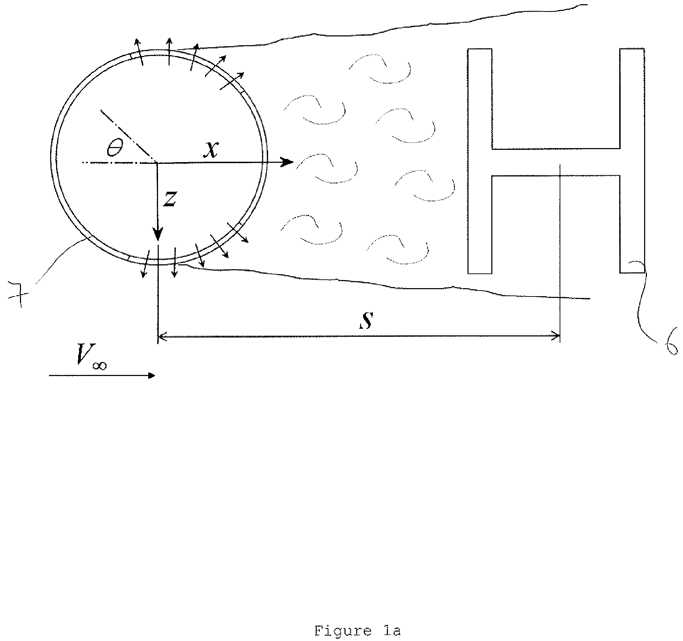

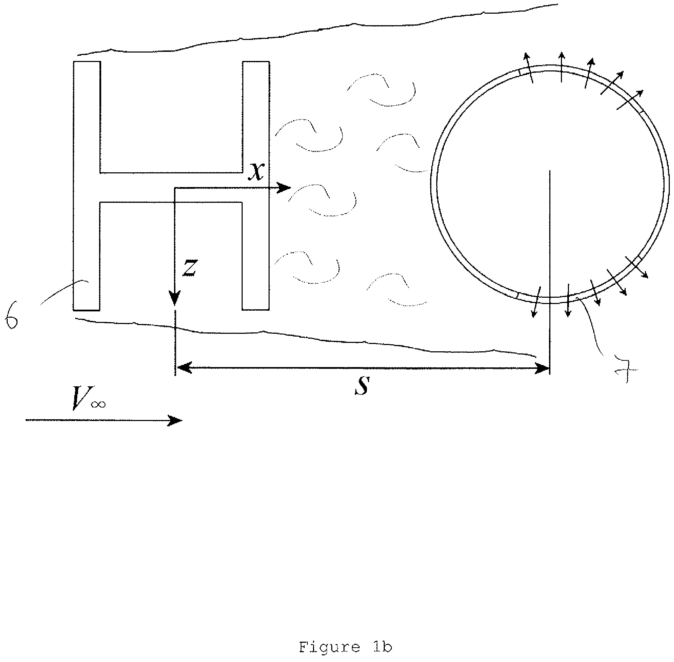

The configurations investigation were an H-beam 6 and a cylinder 7 in tandem, one with the cylinder 7 directly upstream (Figure 1a) and the second with the cylinder 7 directly downstream of the H-beam 6 (Figure 1b).

Preliminary experiments were carried out to evaluate the effectiveness of embodiments of the invention. An example will now be described to illustrate the effectiveness of providing a flow control apparatus between the fairing and the structural element and to demonstrate that embodiments of the invention are suitable for use as an aircraft noise-reduction apparatus.

In the following description, the following nomenclature and symbols will be used:
- *A*: Blowing area, m²
- *Cµ*: Blowing coefficient = ^{ṁ}Vⱼ / qS (where Vⱼ is the velocity of the jet, in m/s, and q is the dynamic pressure, in kg/ms²)
- *ṁ*: Mass flow rate, kg/s
- *q̇*: Flow rate, m³/s
- *S*: Planform area, m²
- *S*: Component separation distance, m
- *u, V, W*: Cartesian components of velocity vector, m/s
- *u'u'*: Component of Reynolds stress tensor, m²/s²
- *V*: Magnitude of velocity, m/s
- *x, y, z*: Cartesian coordinates (x positive downstream, y positive to port, z positive down)
- *ø*: Cylinder diameter, m

The use of distributed blowing to reduce this source of noise was investigated in a series of experiments. The two bluff bodies in tandem were a cylinder 7 and an H-beam 6. Two configurations were tested, one with the cylinder 7 directly upstream of the H-beam 6 and the other with the H-beam 6 directly upstream of the cylinder 7. This modelled the interaction noise due to large perturbations in the wake generated by an upstream component inducing unsteady pressure fluctuations on a downstream component. In both cases distributed blowing was applied to the cylinder 7. The objective of the test was to reduce the interaction noise of the two components by the use of blowing. Blowing was used to break down the large flow structures and to displace the peak turbulence away from the surface of the downstream component.

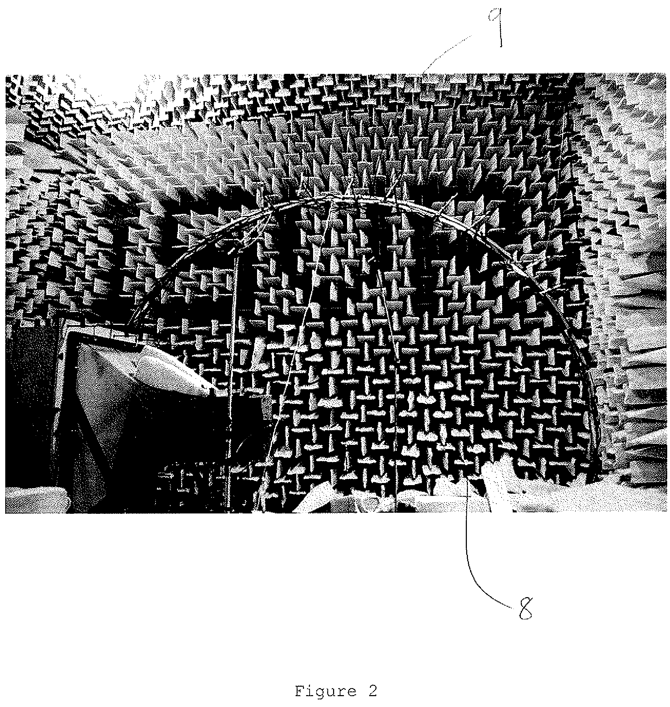

Microphone measurements were made in an anechoic chamber 8, shown in Figure 2. The loudest configuration was the cylinder 7 upstream of the H-beam 6. Blowing produced a reduction of 16 dB at a frequency of 70 Hz. There was a broadband reduction of up to 4 dB up to a frequency of 10 kHz. Only a low pressure of blowing air is needed. This is because, the air flowing over the cylinder 7 is less than atmospheric pressure so only a low pressure jet is needed to expel air from the cylinder 7. In addition, only a relatively small blowing rate was required to provide the noise reduction. A blowing coefficient of 1.4 × 10⁻³ was adequate to achieve a noise reduction.

### Apparatus and Procedure

### Wind tunnel

Particle image velocimetry experiments were conducted in the University of Southampton's low speed 0.9 m × 0.6 m wind tunnel. The wind tunnel has a closed working section and is of an open circuit design. Endplates were used to achieve a nominally two-dimensional flow around the cylinder 7 and H-beam 6. Free field acoustic measurements were conducted with an open jet wind tunnel in an anechoic chamber 8 shown in Figure 2. An arc 9 of 8 microphones was placed over the model.

### Model design and test configuration

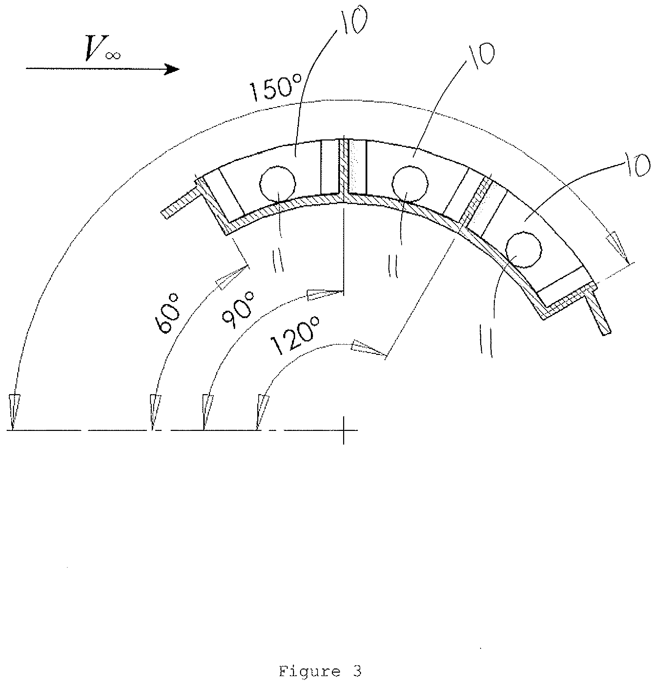

A cylinder model 7 was designed to allow distributed blowing to be applied through the surface of the model. The model was made from a carbon fibre cylinder 7 and contained 12 different plenum chambers 10. The diameter of the cylinder 7 was 0.1 m. The angular positions of the plenum chambers 10 were 60 to 90 deg., 90 to 120 deg. and 120 to 150 deg. as shown in Figure 3.

The plenum chambers 10 were further divided at the half-span of the model. There were holes on the cylinder 7 surface to allow for the placement of on-surface microphones.

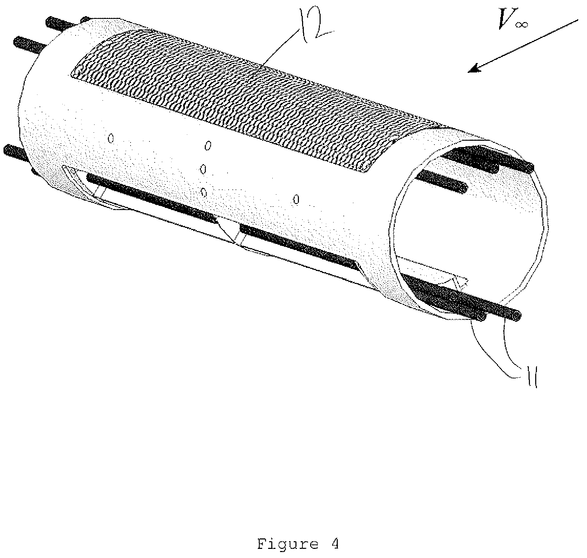

The wind tunnel model is shown in Figure 4. The design of a series of plenum chambers 10 ensured a more uniform distribution of blowing. Blowing was applied to both sides of the cylinder 7 from 60 degrees to 150 degrees as measured from the leading-edge of the cylinder 7. Each plenum chamber 10 was fed by a cross-drilled pipe 11.

The plenum chambers 10 were covered by a permeable plate 12 which allowed air to pass through it. Firstly, a perforated steel plate was tested. Secondly, a sintered bronze plate was tested. The sintered plate allowed a small pore size and therefore a large pressure loss coefficient, which resulted in less variation in permeation velocity across it. It also resulted in a higher pressure differential across the perforated plate 12 for a given permeation velocity. The porosity of both plates 12 was 30%. The pore size for the perforated steel plate was 1 mm and for the sintered bronze plate was 30 µm. It has been found that using a pore size of 12 µm produces a low volume high frequency (hiss) sound. Such "micro-perforated" plates were found to be beneficial in reducing the far-field radiating noise that was due to the blowing noise.

The dimensions of the H-beam 6 were 0.1 m × 0.1 m and it was extruded from aluminium. The default separation distance between the two components (s) was 0.3 m (30). The Reynolds number of this investigation was between 1.3 × 10⁵ and 2.6 × 10⁵.

The compressor used to supply the air was a double-flow side channel compressor made by Rietschle. The maximum pressure difference was ±17000 N/m² (170 mbar). The maximum mass flow rate was 0.078 kg/s. A sound absorption settling tank was used for sound attenuation. The settling tank consisted of a large box with two ducts offset from each other to minimise the direct transmission of sound from the compressor. The chamber 8 was lined with an open cell porous material for sound absorption.

### Measurements

The system used for the particle image velocimetry (PIV) measurements is known, for example as described in "Angland, D., Zhang, X., Chow, L. C., and Molin, N., "Measurements of Flow around a Flap Side-Edge with Porous Edge Treatment," AIAA Paper 2006-0213, 2006".

The laser sheet was pointed in a horizontal plane through a glass window, which makes up one wall of the working section. The camera was placed above the transparent wind tunnel roof. An adaptive cross correlation was performed on interrogation areas measuring 16 × 16 pixels. The horizontal and vertical overlap was 75 %. A peak validation of 1.2 was used to reject spurious vectors. These time averaged data were averaged over 500 images sampled at 2 Hz. The image size was 110 mm × 90 mm with a spatial resolution of 0.35 mm in both directions.

The microphone measurements in the anechoic chamber 8 were conducted using eight Behringer ECM8000 microphones mounted on an arc. The frequency response of the microphones was from 15 Hz to 20 kHz. The microphones were powered by a DIGIMAX FS preamplifier. These data were sampled at a frequency of 44.1 kHz with a block size of 8192 averaged over 100 blocks. The 8 microphones were spaced equally on the arc from 90 deg. to 157 deg. measured from the freestream velocity vector.

### Sample of Results

### Particle image velocimetry

Particle image velocimetry (PIV) was used to determine the time-averaged flowfield and the turbulence statistics. The time averaged flowfield allowed the profiles in the wake to be determined and an estimation of the momentum deficit or addition due to the application of blowing. For comparison a solid wall condition with no blowing was used. This provided a baseline condition with which to compare the cylinder 7 with blowing applied.

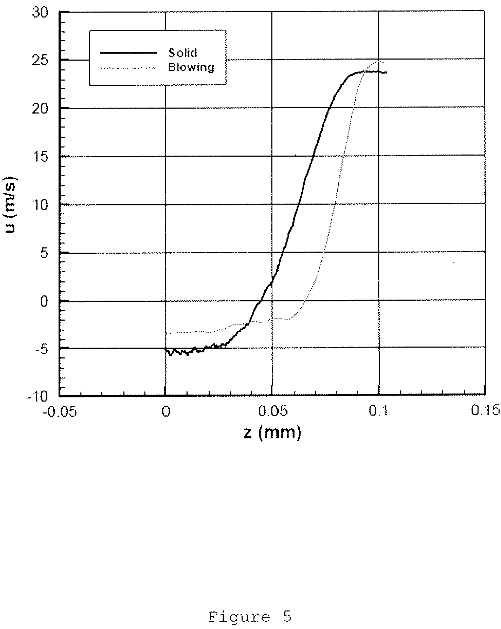

Mean velocity profiles in the wake at x=0.079 m are shown in Figure 5. The effect of blowing was most influential on the low speed, low pressure separated flow behind the cylinder 7. The blowing flow rate was insufficient to promote significant early separation of the flow from the surface of the cylinder 7. However, it did have an influence on the low speed flow in the wake immediately aft of the cylinder 7. The velocity profiles showed a widening of the wake to the sides of the cylinder 7 with blowing applied. Another effect was an increase in the velocity gradient across the shear layer. The use of blowing also produced a decrease in the momentum deficit immediately aft of the cylinder 7. This was an effect of blowing normal to the cylinder 7 surface. However, due to the spreading of the wake the overall momentum deficit increased.

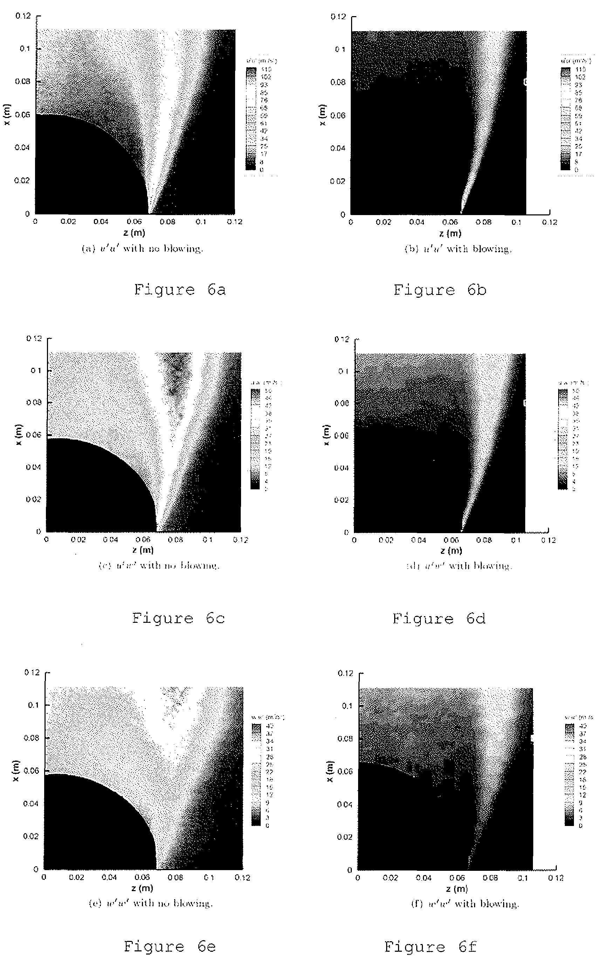

Examining the Reynolds stresses helped determine how the application of blowing changed the structures in the wake and altered the shear layer. In two dimensional PIV three components of the Reynolds stress tensor can be determined, i.e. *u'u', u'w'* and *w'w'. u'* and *w'* are the perturbed velocities about the mean flow. Therefore they are a measure of the magnitude of unsteady velocity fluctuations in the wake. The unsteady wake impinging on the downstream component is a source of significant additional noise. To reduce the interaction noise the large perturbations in the wake need to be reduced. These are shown in Figure 6(a), (c) and (e) for the solid wall configuration. The shear layers at the edge of the wake behind the cylinder 7 showed significant spreading aft of the cylinder 7.

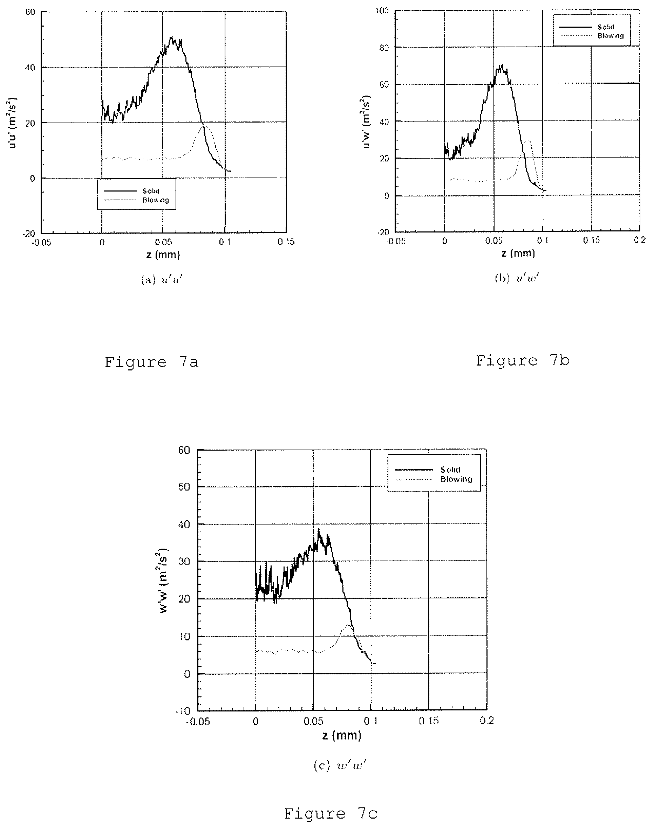

The Reynolds stresses in the wake with blowing applied is shown in Figure 6(b), (d) and (f). With blowing, the magnitude of the components of the stress tensor had reduced and their spatial extent had also been reduced. The profiles of the Reynolds stresses across the wake are shown in Figure 7. The effect of applying blowing through the perforated material was to reduce the magnitude of Reynolds stress in the wake and shear layer and to displace the peak of maximum stress further away from the centreline.

The effect of blowing on the upstream cylinder 7 was to breakdown the large flow structures in the wake which was evidenced by the reduction in the velocity fluctuations in the shear layer and wake. This reduction in wake strength reduced the interaction noise when the turbulent wake impinged on the downstream component. To determine the acoustic reduction, free-field microphone measurements were made in an anechoic chamber 8.

### Acoustic measurements

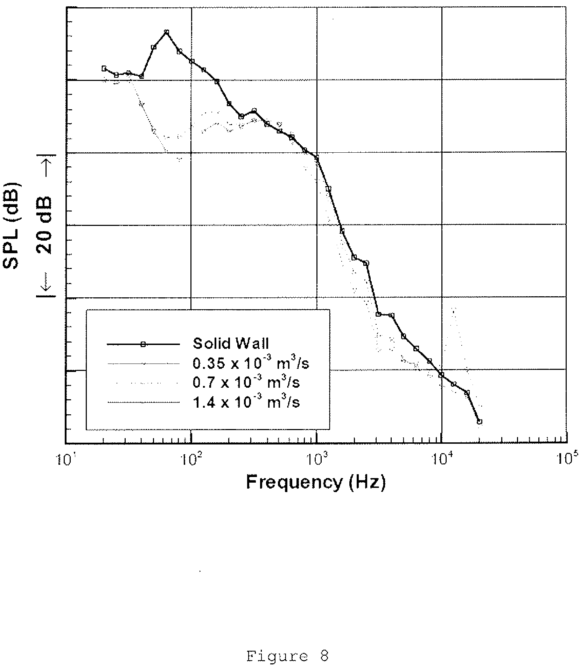

Acoustic measurements were made in an anechoic chamber 8 with an open jet wind tunnel. The changes in sound pressure levels were averaged over the four microphones above the model in the overhead position. These microphones recorded the loudest model noise. No acoustic data could be obtained in the rearward arc due to the wake of the model impinging on the microphones. The first configuration tested was the cylinder 7 placed upstream of the H-beam 6. The blowing was applied to the cylinder 7. A plot of sound pressure level (SPL) versus frequency is shown in Figure 8 with different flow rates.

The maximum reduction was 16 dB centered around 70 Hz which corresponded to a Strouhal number based on cylinder 7 diameter of 0.18m. There was also a further broadband reduction from 800 Hz to 10 kHz of up to 4 dB. The largest flow rate tested produced additional blowing noise at 12 kHz that was louder than the baseline configuration. From the aerodynamic flowfield investigation it was shown that blowing on the cylinder 7 reduced the large velocity fluctuations in the wake due to breaking down the large flow structures in the wake. This modified the wake that impinged on the H-beam 6 downstream resulted in significantly less noise been generated.

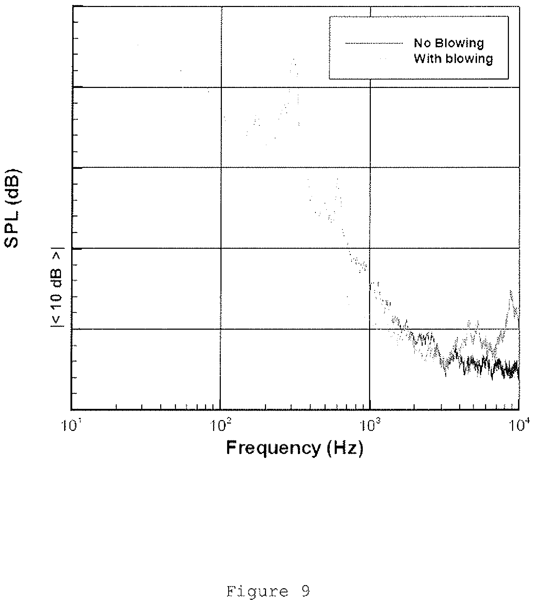

The second configuration tested was the H-beam 6 upstream of the cylinder 7. The blowing was applied to the cylinder 7 to displace the turbulent wake away from the downstream component. A plot of SPL versus frequency is shown in Figure 9. The peak reduction was 20 dB at a frequency of 300 Hz which corresponded to a Strouhal number of 0.75 based on the height of the H-beam 6. The flow rate was 0.7 × 10⁻³ m³/s. There were broadband reductions from 20 Hz up to 3 kHz.

Above this frequency the blowing noise was louder than the noise generated by the wind tunnel model. This configuration of H-beam 6 and cylinder 7 produced very little noise at and above this frequency and all the energy was contained in the lower frequencies. However, it is well known that high frequency noise dissipates much quicker than lower frequency noise. Hence, when distributed blowing is used on landing gear components, the increase in high frequency noise would not be perceived on the ground, depending on the pore size. This is because the additional high frequency blowing noise is proportional to pore size.

### Conclusion

Although, in the above example, the blowing is achieved by the use of cross-drilled pipes 11 inside the cylinder 7 feeding air to plenum chambers 10, the blowing mechanism may, alternatively, simply comprise pipes attached to the element, each pipe having a series of nozzles in form of simple holes or slots. The holes or slots are distributed along length of the pipe (and therefore, along the length of the element) to form an array. Pressurised air is provided to the pipe to provide blowing from the nozzles in the form of a relatively small jet downstream. As another alternative, the pipes may be embedded in the cylinder 7 structure.

The use of blowing to reduce interaction noise between two bluff body components was investigated. The tandem configuration produced significantly more noise compared to the isolated components. The application of blowing to the cylinder 7 produced a noise reduction for both configurations. The noisiest configuration was the cylinder 7 placed upstream of the H-beam 6. Blowing applied to the cylinder 7 reduced the large velocity fluctuations in the wake of the cylinder 7 thereby reducing the interaction noise. The largest reduction was 16 dB at a freestream velocity of 40 m/s. The largest flow rate produced additional high frequency noise at 12 kHz. Blowing on the cylinder 7 when it was downstream of the H-beam 6 also produced a broadband reduction in the interaction noise of up to 20 dB. The frequency range over which the blowing was successful in reducing the noise was from 20 Hz to 3 kHz.

### Practical Application on an Aircraft

When used on a landing gear of an aircraft, it is envisaged that the blowing air will be taken from a bleed air system of an aircraft. Alternatively, the air can be taken from a fan output or from an air scoop. The air will be supplied to plenum chambers distributed about an element of the landing gear acting as a bluff body.

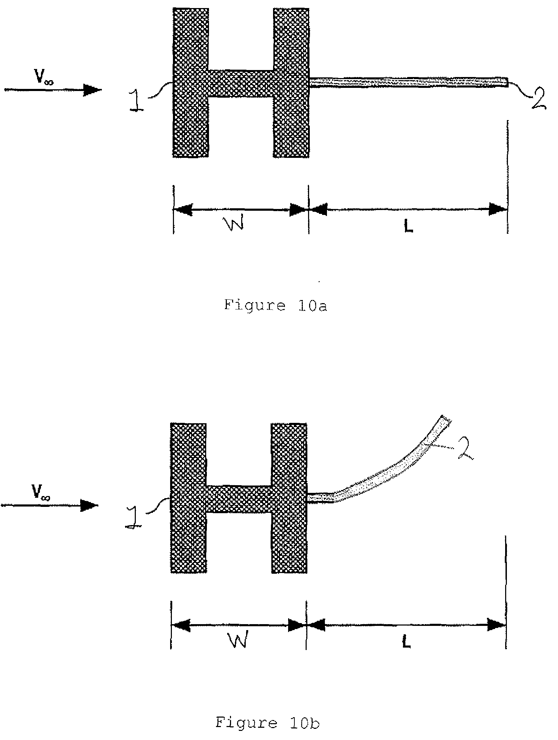

Figure 10a shows a noise reduction device in accordance with an embodiment of the invention, in its deployed position.

The noise reduction device comprises a structural element 1 which is exposed, in use, to an airflow V_{∞}. In other words, the structural element 1 is flow-facing. V_{∞} may be assumed to be the free stream airflow. In the case where the structural element 1 is a landing gear component it will be appreciated that it may be deployable, such that it is only be exposed to the airflow V_{∞} during take-off, landing and approach.

The structural element 1 is a bluff body, in this case a H-beam 6. The structural element has a length in the streamwise direction of W. The skilled person will appreciate that a bluff body may be generally characterised as any body where there is significant flow separation and a generally unsteady wake.

The noise reduction device further comprises a flow control apparatus in the form of a splitter plate 2 of streamwise length L. The splitter plate 2 is a resiliently flexible plate attached to the downstream side of the structural element 1. When in the deployed position, the splitter plate 2 extends perpendicularly from the downstream surface of the structural element 1 and is located on the centre line of the element.

The splitter plate 2 is made of a soft rubber material.

The splitter plate 2 is arranged such that when it is in the deployed position, it is substantially aligned with the free stream flow V_{∞}. When mounted on an aircraft it may be convenient to simply align the splitter plate 2 with the longitudinal axis of the aircraft, since this is a reasonable approximation to the free stream airflow during approach and landing.

The splitter plate 2 can be deformed into a stowed position (shown in Figure 10b) by a force exerted on it. In the case where the structural element 1 is a landing gear component it will be appreciated that the flow control apparatus may be deformed into its stowed position by forces exerted on it by elements of the landing gear (not shown) as they are moved into their stowed position.

As is shown in Figure 10b, the flow control apparatus 2, when in the stowed position, is bent back towards the structural element 1 to a certain extent so that it takes up less effective space than when in the deployed position. In other words, the flow control apparatus 2 extends outwards from the structural element a length less than its actual length L.

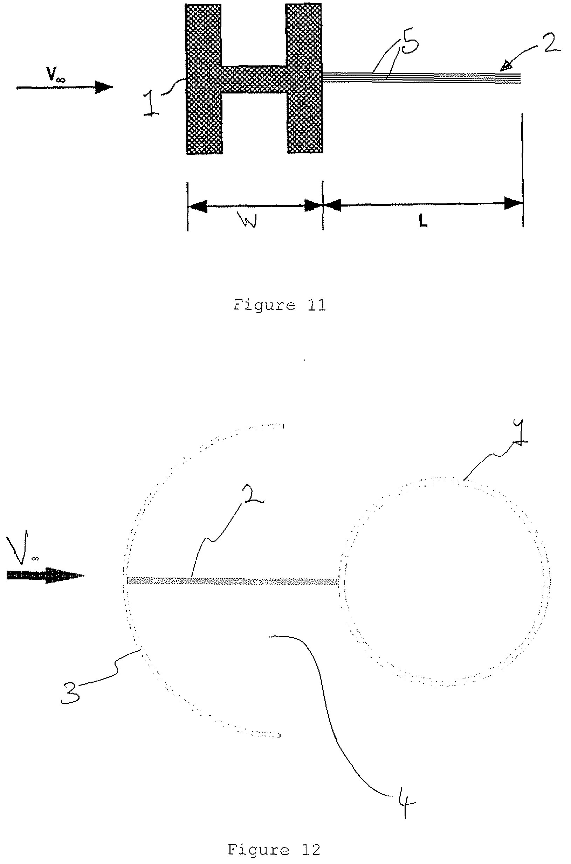

As an alternative, as shown in Figure 11, the splitter plate 2 may comprise brushes with resiliently deformable bristles 5. The bristles 5 are attached to the downstream side of the structural element 1. When in the deployed position, the bristles 5 extend perpendicularly from the downstream surface of the structural element 1 and are located on the centre line of the element.

Preliminary experiments were carried out to evaluate the effectiveness of using a splitter plate. An H-beam 6 was tested as it is considered a good example of a simple bluff-body which produces noise over a broad range of frequency spectrum. A splitter plate 2 having a length L, measured in the streamwise direction, was attached to the rear of the element 1 having a length W. A selection of different splitter plate lengths (L/W=1, L/W=2 and L/W=3), and a body without a splitter plate, were tested.

A comparison of flow visualisations with and without the presence of the splitter plate showed that the presence of the splitter plate blocked interaction between shear layers in the vicinity of the body. The shear layers continued to converge downstream leading to a longer and wider wake. The splitter plate 2 delays the roll-up of vortices behind the element 1 and interrupts the interaction of shear layers.

The Coefficient of Drag for each arrangement was also compared. The addition of the L/W=1 splitter plate resulted in a drop in the coefficient of drag of C_{d} = 0.47. Increasing the length of the splitter plate reduced the drag further by C_{d} = 0.23 between L/W = 1 and L/W = 3.

Standard deviations of velocity plots were used to compare the unsteady flow. The unsteadiness was concentrated around the H-beam 6 with the highest velocity fluctuation just aft of it. In the L/W = 1 configuration the unsteadiness moved further downstream and away from the model.

The narrowband spectra were measured in an anechoic chamber 8 and plots compared for the different configurations to show how the noise signature of the model was affected. The L/W = 0 case showed a strong tonal peak at a Strouhal Number (based upon the width of the body) of 0.125 and broadband noise "hump" centered about a Strouhal Number of 0.75. In the cases of L/W = 1, L/W = 2 and L/W = 3 the tonal peak was suppressed and the noise was reduced over the whole frequency range. The splitter plate configurations showed very similar noise spectra up to a Strouhal Number of 17.5. Above that frequency the L/W = 2 configuration showed marginally lower noise levels.

Source localization plots were used to identify where origin of the noise reduction. The comparison between the plots showed that the H-beam 6 is no longer the main noise source when the splitter plate is used. Rather, the noise source is located towards the trailing edge of the splitter plate.

Figure 12 shows an arrangement in which the flow-facing component is a fairing 3, positioned upstream of a structural element 1 and arranged to at least partially divert the free stream airflow away from the element 1. Such fairings have been proposed for noise reduction purposes. However, the applicants have recognised that in some circumstances the noise-reduction fairing 3 may itself contribute to the total broadband noise of the aircraft. Thus, a splitter plate 2 is provided in a cavity 4 defined between the fairing 3 and the element 1. The splitter plate 2 may conveniently be arranged to support the fairing 3 from the structural element 1.

The splitter plate 2 reduces or eliminates vortex shedding from the fairing 3 and in turn reduces noise. As with the previous embodiments this is due to the splitter plate 2 blocking the interaction between opposing shear layers. The splitter plate 2 also reduced the interaction between the shear layers and the downstream element 1.

It will be appreciated that the flexible splitter plate 2 may be attached to the downstream side of the fairing 3 or the upstream side of the element 1 or to both. When the flow control apparatus is moved to the stowed position (not shown), the apparatus 2 can either be urged toward the fairing 3, the element 1 or both.

Preliminary experiments were carried out to evaluate the effectiveness of using a splitter plate in the cavity between a fairing and a structural element. Three different sizes of elements 1 were used to investigate the possibility of reducing the size of the fairing 3 with respect to the element 1. Aerodynamic and acoustic results were performed in wind tunnel and anechoic facilities.

In the configurations without the splitter plate 2 a re-circulating region of flow was observed in the cavity 4 between the fairing 3 and the element 1 as the shear layer aft of the fairings' trailing edge impinged on the element part, rolling up inside the cavity 4. The element 1 was subjected to relatively high-speed flow due to the shear layer interaction.

The application of the splitter plate for the two smaller elements 1 blocked the interaction between the opposing shear layers and inhibited the shear layer from interacting with the element. As a result the re-circulating flow inside the cavity 4 was reduced considerably. The larger element 1 was large enough for the shear layer to impinge on it, nevertheless the splitter plate 2 impeded the strong re-circulation flow within the cavity 4. Instead a low velocity wake was observed aft of the element 1. The effect of this change in flow structure had an impact on the noise produced. The source strength around the apparatus was significantly reduced as the magnitude of the velocities and the unsteadiness around the fairing 3 and the element 1 were lower, hence reducing the dipole strength attributed with the fluctuating lift forces on the apparatus. The strong shedding produced a strong tonal peak in the noise measurements, increasing the overall noise signature. The splitter plate reduced or totally eliminated this tone. The configurations involving the two smaller elements 1 reduced this tonal peak by about 14 dB, measured from the 1/3-octave band spectra. The larger element eliminated the tonal peak completely although a second smaller tonal peak was observed at a high frequency.

### Practical Application on an Aircraft

When used on a landing gear of an aircraft, it is envisaged that the splitter plate would be attached to the downstream side of an element of the landing gear acting as a bluff body. When the landing gear is retracted into its stowed position, elements of the landing gear move in relation to each other. The splitter plate will be moved/deflected by one or more of the landing gear elements if the splitter plate is in the path of the moving landing gear elements. The force from the elements acting on the splitter plate will cause the splitter plate to deflect and allow the landing gear to retract into its stowed position. Upon deployment of the landing gear, the landing gear elements will move and any elements causing the splitter plate to deflect will be moved out of the way allowing the splitter plate to adopt its deployed position.

Whilst the present invention has been described and illustrated with reference to particular embodiments, it will be appreciated by those of ordinary skill in the art that the invention lends itself to many different variations not specifically illustrated herein. It will be appreciated that the scope of the invention is only limited by the wording of the claims.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A part of an aircraft landing gear, the part comprising a flow-facing element and an aircraft noise reduction device comprising a flow control apparatus (2) arranged to be positioned downstream of the flow-facing element (1), wherein the flow control apparatus is arranged, in use, to reduce noise induced by unsteady flow downstream of the flow-facing element (2), and wherein the flow control apparatus (1) is arranged to be moveable in relation to the flow-facing element between a stowed position and a deployed position, wherein the flow control apparatus is made from a flexible material such that the flow control apparatus (2) is deformable between the stowed and deployed positions, and wherein the flow control apparatus (2) is made from a resiliently flexible material such that the flow control apparatus naturally assumes the deployed position.

2. A part of an aircraft landing gear as claimed in claim 1, wherein the flow control apparatus comprises a splitter plate (2) arranged to extend downstream of the flow-facing element when in the deployed position.

3. A part of an aircraft landing gear as claimed in claim 2, wherein, when in the deployed position, the splitter plate (2) is substantially aligned with the free stream airflow.

4. A part of an aircraft landing gear as claimed in claim 2 or claim 3, wherein, when in the stowed position, the splitter plate (2) is orientated to at least partly align with the flow-facing element (1).

5. A part of an aircraft landing gear as claimed in any of claims 1 to 4, wherein the flow control apparatus (2) is made from rubber.

6. A part of an aircraft landing gear as claimed in any of claims 1 to 5, wherein the flow control apparatus (2) comprises brushes with resiliently deformable bristles (5).

7. A part of an aircraft landing gear as claimed in any of claims 1 to 6, wherein the flow control apparatus (2) is arranged to be automatically moved between the stowed and deployed positions when the flow-facing element (1) is moved from its stowed and deployed positions.

8. A part of an aircraft landing gear as claimed in any of claims 1 to 7, wherein the flow-facing element (1) comprises an aircraft structural element.

9. A part of an aircraft landing gear as claimed in claim 8 wherein the structural element (1) comprises a component of an aircraft landing gear.

10. A part of an aircraft landing gear as claimed in claim 9 when dependent on claim 7, wherein the flow control apparatus (2) is arranged to be automatically moved between the stowed and deployed positions by a force applied by an element of the landing gear when the landing gear is moved from its stowed and deployed positions.

11. An aircraft landing gear comprising a part of an aircraft landing gear as claimed in any of claims 1 to 10.

12. An aircraft comprising a part of an aircraft landing gear as claimed in any of claims 1 to 10 or an aircraft landing gear as claimed in claim 11.

13. A method of reducing noise caused by landing gear on an aircraft including the steps of identifying a part of the landing gear that contributes to the noise generated by the landing gear when in flight, and positioning a flow control apparatus made from a flexible material with respect to a flow facing element of said part for reducing the noise generated by said part such that said part will be according to any of claims 1 to 10.

## Patentansprüche

1. Bauteil einer Flugzeug-Landeklappe, wobei das Bauteil aufweist ein strömungszugewandtes Element und eine Flugzeuglärm-Reduzierungsvorrichtung mit einer Strömungssteuerungseinrichtung (2), die zur Anordnung stromabwärts des strömungszugewandten Elements (1) vorgesehen ist, wobei die Strömungssteuerungseinrichtung im Gebrauch stromabwärts des strömungszugewandten Elements (2) zur Reduzierung von durch unstetige Strömung induziertem Lärm angeordnet ist, wobei die Strömungssteuerungseinrichtung (1) derart ausgebildet ist, dass diese relativ zu dem strömungszugewandten Element zwischen einer Stauposition und einer Ausfahrposition bewegbar ist, wobei die Strömungssteuerungseinrichtung (2) aus einem verformbaren Material derart gebildet ist, dass die Strömungssteuerungseinrichtung (2)zwischen der Stauposition und der Ausfahrposition verformbar ist, und wobei die Strömungssteuerungseinrichtung (2) aus einem elastisch verformbaren Material derart ausgebildet ist, dass die Strömungssteuerungseinrichtung von sich aus die Ausfahrposition einnimmt.

2. Bauteil einer Flugzeug-Landeklappe nach Anspruch 1, wobei die Strömungssteuerungseinrichtung eine Teilerplatte (2) aufweist, die geeignet ist, sich in der Ausfahrposition stromabwärts des strömungszugewandten Elements zu erstrecken.

3. Bauteil einer Flugzeug-Landeklappe nach Anspruch 2, wobei die Teilerplatte (2) in der Ausfahrposition im Wesentlichen fluchtend mit der freien Luftströmung ausgerichtet ist.

4. Bauteil einer Flugzeug-Landeklappe nach Anspruch 2 oder 3, wobei die Teilerplatte (2) in der Stauposition zumindest teilweise fluchtend mit dem strömungszugewandten Element (1) ausgerichtet ist.

5. Bauteil einer Flugzeug-Landeklappe nach einem der Ansprüche 1 bis 4, wobei die Strömungssteuerungseinrichtung (2) aus Gummi gebildet ist.

6. Bauteil einer Flugzeug-Landeklappe nach einem der Ansprüche 1 bis 5, wobei die Strömungssteuerungseinrichtung (2) Bürsten mit elastisch verformbaren Borsten (5) aufweist.

7. Bauteil einer Flugzeug-Landeklappe nach einem der Ansprüche 1 bis 6, wobei die Strömungssteuerungseinrichtung (2) dazu geeignet ist, zwischen der Stauposition und der Ausfahrposition bewegt zu werden, wenn das strömungszugewandte Element zwischen dessen Stau- und Ausfahrpositionen bewegt wird.

8. Bauteil einer Flugzeug-Landeklappe nach einem der Ansprüche 1 bis 7, wobei das strömungszugewandte Element (1) ein Flugzeug-Strukturelement umfasst.

9. Bauteil einer Flugzeug-Landeklappe nach einem der Ansprüche 1 bis 8, wobei das Strukturelement (1) eine Komponente einer Flugzeug-Landeklappe umfasst.

10. Bauteil einer Flugzeug-Landeklappe nach Anspruch 9, wenn dieser abhängig ist von Anspruch 7, wobei die Strömungssteuerungseinrichtung (2) dazu geeignet ist, durch eine Kraft, die durch ein Element der Landeklappe aufgebracht wird, wenn die Landeklappe von deren Stau- und deren Ausfahrpositionen bewegt wird, automatisch zwischen der Stau- und der Ausfahrposition bewegt zu werden.

11. Flugzeug-Landeklappe, aufweisend ein Bauteil einer Flugzeug-Landeklappe nach einem der Ansprüche 1 bis 10.

12. Flugzeug, aufweisend ein Bauteil einer Flugzeug-Landeklappe nach einem der Ansprüche 1 bis 10 oder eine Flugzeug-Landeklappe nach Anspruch 11.

13. Verfahren zur Verringerung von durch eine Landeklappe eines Flugzeugs erzeugtem Lärm, wobei das Verfahren aufweist den Schritt der Identifizierung eines Bauteils der Landeklappe, das den durch die Landeklappe erzeugten Lärm mitverursacht, und zur Reduzierung des durch dieses Bauteil erzeugten Lärms den Schritt der Positionierung einer aus einem verformbaren Material gebildeten Strömungssteuerungseinrichtung relativ zu einem strömungszugewandten Element des Bauteils derart, dass das genannte Bauteil ein Bauteil nach einem der Ansprüche 1 bis 10 bildet.

## Revendications

1. Partie d'un train d'atterrissage d'avion, la partie comprenant un élément faisant face au flux et un dispositif de réduction du bruit de l'avion qui comprend un appareil de régulation de flux (2) prévu pour être positionné en aval de l'élément faisant face au flux (1), l'appareil de régulation de flux étant prévu, pendant l'utilisation, pour réduire le bruit induit par le flux instable en aval de l'élément faisant face au flux (2), et l'appareil de régulation de flux (1) étant prévu pour être mobile par rapport à l'élément faisant face au flux, entre une position rétractée et une position déployée, l'appareil de régulation de flux étant fabriqué en matériau flexible de sorte que l'appareil de régulation de flux (2) soit déformable entre les positions rétractée et déployée, et l'appareil de régulation de flux (2) étant fabriqué en matériau flexible et élastique de sorte que l'appareil de régulation de flux adopte naturellement la position déployée.

2. Partie d'un train d'atterrissage d'avion selon la revendication 1, dans laquelle l'appareil de régulation de flux comprend une plaque de séparation (2) prévue pour s'étendre en aval de l'élément faisant face au flux lorsqu'elle est en position déployée.

3. Partie d'un train d'atterrissage d'avion selon la revendication 2, dans laquelle, lorsqu'elle est en position déployée, la plaque de séparation (2) est sensiblement alignée avec le flux d'air libre.

4. Partie d'un train d'atterrissage d'avion selon la revendication 2 ou 3, dans laquelle, lorsqu'elle est position rétractée, la plaque de séparation (2) est orientée afin de s'aligner au moins partiellement avec l'élément faisant face au flux (1).

5. Partie d'un train d'atterrissage d'avion selon l'une quelconque des revendications 1 à 4, dans laquelle l'appareil de régulation de flux (2) est fabriqué en caoutchouc.

6. Partie d'un train d'atterrissage d'avion selon l'une quelconque des revendications 1 à 5, dans laquelle l'appareil de régulation de flux (2) comprend des balais à poils élastiquement déformables (5).

7. Partie d'un train d'atterrissage d'avion selon l'une quelconque des revendications 1 à 6, dans laquelle l'appareil de régulation de flux (2) est prévu pour être automatiquement déplacé entre les positions rétractée et déployée lorsque l'élément faisant face au flux (1) est déplacé depuis ses positions rétractée et déployée.

8. Partie d'un train d'atterrissage d'avion selon l'une quelconque des revendications 1 à 7, dans laquelle l'élément faisant face au flux (1) comprend un élément structurel d'avion.

9. Partie d'un train d'atterrissage d'avion selon la revendication 8, dans laquelle l'élément structurel (1) comprend un composant d'un train d'atterrissage d'avion.

10. Partie d'un train d'atterrissage d'avion selon la revendication 9, lorsqu'elle dépend de la revendication 7, dans laquelle l'appareil de régulation de flux (2) est prévu pour être automatiquement déplacé entre les positions rétractée et déployée par une force appliquée par un élément du train d'atterrissage lorsque le train d'atterrissage est déplacé de sa position rétractée à sa position déployée.

11. Train d'atterrissage d'avion qui comprend une partie d'un train d'atterrissage d'avion selon l'une quelconque des revendications 1 à 10.

12. Avion qui comprend une partie d'un train d'atterrissage d'avion selon l'une quelconque des revendications 1 à 10 ou un train d'atterrissage d'avion selon la revendication 11.

13. Procédé de réduction du bruit généré par le train d'atterrissage sur un avion, qui comprend les étapes qui consistent à identifier une partie du train d'atterrissage qui contribue au bruit généré par le train d'atterrissage en vol, et à positionner un appareil de régulation de flux fabriqué en matériau flexible par rapport à un élément faisant face au flux de ladite partie afin de réduire le bruit généré par ladite partie de sorte que ladite partie soit selon l'une quelconque des revendications 1 à 10.
